# FASCICULE DE BREVET EUROPEEN

(11) **EP 1 858 989 B1**
(45) Date de publication et mention de la délivrance du brevet: **09.12.2015**
(21) Numéro de dépôt: 06709035.7
(22) Date de dépôt: 05.01.2006
(51) Int. Cl.: C09D 5/02, C09D 7/02

(54) **COMPOSITIONS DE PEINTURES AQUEUSES COMPRENANT UNE DISPERSION COLLOÏDALE DE CERIUM**
WÄSSRIGE ANSTRICHMITTELZUSAMMENSETZUNGEN, DIE EINE KOLLOIDALE DISPERSION VON CER ENTHALTEN
AQUEOUS PAINT COMPOSITIONS COMPRISING A COLLOIDAL DISPERSION OF CERIUM

(30) Priorité: 07.01.2005 US 642458 P
(43) Date de publication de la demande: 28.11.2007
(73) Titulaire: RHODIA CHIMIE, 75009 Paris (FR); Centre National de la Recherche Scientifique, 75794 Paris Cedex 16 (FR)
(72) Inventeur: BERRET, Jean-François, F-92310 Sevres (FR); MORVAN, Mikel, 78240 AIGREMONT (FR); SEHGAL, Amit, Marlton, NJ 08053 (US)
(74) Mandataire: Senninger, Thierry
(86) Numéro de dépôt international: PCT/FR2006/000018
(87) Numéro de publication internationale: WO 2006/072743

(56) Documents cités:
- FR-A- 2 836 479
- FR-A- 2 840 313
- US-A- 4 545 923

## Description

L'invention se rapporte à des compositions de peintures aqueuses contenant une dispersion colloïdale de cérium, à leur méthode de préparation et à leur utilisation.

Les compositions de peintures formulées à l'aide d'une dispersion colloïdale de cérium présentent une difficulté inhérente en raison de l'instabilité des sols de nanoparticules inorganiques nues à un pH autour de 3 et plus.

Le brevet WO 03/099942 enseigne un procédé en vue de la stabilisation des compositions de peintures aqueuses comprenant du cérium colloïdal à un pH neutre. Les nano particules de cérium jouent le rôle d'agents absorbeurs des rayons UV, inorganiques, transparents, non lessivables, non dégradables, dans le revêtement. Elles présentent également d'autres avantages supplémentaires comme une résistance accrue à l'eau et une résistance mécanique améliorée du revêtement.

Les dispersions colloïdales de cérium sont stabilisées dans les compositions de peinture dans le brevet WO 03/099942 par addition d'un agent complexant acide ayant trois groupements fonctionnels ou davantage, plus particulièrement l'acide citrique. Le procédé esquissé est très efficace pour ce qui est d'élargir le domaine de pH des dispersions de cérium stables à un pH de 7 et au-dessus, ce qui permet leur utilisation dans certaines applications de revêtement. Le cérium colloïdal stabilisé peut présenter, toutefois, une évolution en termes de couleur vers une dispersion de couleur brun sombre lorsque des précautions appropriées ne sont pas prises et que le sol est stocké en étant exposé à la lumière, dans le domaine des longueurs d'onde visibles et à un rayonnement UV.

Un des objectifs de la présente invention est de mettre à disposition des compositions de peintures aqueuses comprenant une dispersion colloïdale de cérium qui sont stables et qui ne se colorent pas à la suite du stockage sous exposition à la lumière et/ou à un rayonnement UV. La stabilité à laquelle il est fait référence ci-dessus en tant qu'objectif signifie l'absence d'un changement visible quelconque dans la pigmentation et l'absence d'une précipitation quelconque observable à l'oeil nu avec le temps.

Ces objectifs et d'autres qui feront leur apparition dans ce qui suit ont été réalisés au moyen d'une composition de peinture aqueuse comprenant un mélange :
(1) d'une peinture aqueuse;
(2) d'une dispersion colloïdale d'un composé du cérium comprenant un polymère (i) hydrosoluble ou hydrodispersible obtenu par polymérisation d'au moins un monomère (I) correspondant à:
   (I): un acide ou un anhydride monocarboxylique ou polycarboxylique, linéaire ou ramifié, aliphatique, cyclique ou aromatique, à insaturation éthylénique et, en option,
      un monomère (II) correspondant à:
   (II) : un ester polyoxyalkyléné d'un acide carboxylique à insaturation éthylénique; ou
obtenu à partir de la polymérisation d'au moins un acide ou un anhydride monocarboxylique ou polycarboxylique, linéaire ou ramifié, aliphatique, cyclique ou aromatique, à insaturation éthylénique; et (3) une base.

Le terme "peinture" vise un revêtement de polymère quelconque déposé sur un substrat et protégeant le substrat. Ce terme englobe les peintures, les laques et les vernis aqueux. Les termes "laques" et "vernis" ont la signification usuelle dans le domaine technique visé. Une laque veut dire en général une formulation transparente ou semi-transparente, appliquée en tant que revêtement sur un substrat en bois pour protéger ce dernier et ayant un extrait sec de l'ordre de 10% en poids ou de 40 à 50% en poids s'il s'agit d'une laque primaire ou d'une laque de finition, respectivement.

Un vernis est une formulation plus concentrée qu'une laque. Conformément à la présente invention, le terme "peinture" inclut également des monomères ou des résines en émulsion comme des résines alkydes telles que la résine glycéropthalique, des résines modifiées d'huiles longues ou courtes, des résines acryliques dérivées des esters d'acide acrylique ou méthacrylique, copolymérisées en option avec de l'acrylate d'éthyle, de l'éthyl-2-hexyle ou du butyle, des résines acryliques-isocyanate, des résines vinyliques, l'acétate de polyvinyle, le chlorure de polyvinyle, des copolymères chlorure de vinyle/acétate de vinyle, des copolymères chlorure de vinyle/chlorure de vinylidène, des résines aminoplastes, des résines phénoliques, des résines de polyesters, des résines de polyuréthane, des résines époxydes, des résines de silicone et des résines de cellulose ou de nitrocellulose.

La présente invention peut s'appliquer à tous les genres de peintures aqueuses appliquées sur tous les genres de substrats. Ce substrat peut être le bois, des métaux pour les peintures d'automobile, le verre, le verre utilisé dans les bâtiments. D'autres substrats peuvent être des revêtements sur des produits organiques ou minéraux, destinés à préserver leur transparence dans le domaine de la lumière visible. D'autres substrats peuvent être des fibres ou des étoffes synthétiques ou naturelles revêtues à l'aide des résines citées ci-dessus.

L'invention s'applique plus particulièrement à des laques réticulables sous l'effet d'un rayonnement UV, c'est-à-dire des laques étant immédiatement réticulées et séchées sous rayonnement UV, juste après revêtement sur le substrat, plus particulièrement sur un substrat en bois.

Les termes "dispersions colloïdales aqueuses d'un composé de cérium" ou "dispersion de cérium aqueuse" ou "sol de cérium" veulent dire tous les systèmes formés de particules solides fines d'un composé de cérium ayant des tailles colloïdales, en suspension dans une phase aqueuse. Le terme particule utilisé dans la présente spécification englobe des particules discrètes ou des agrégats de particules. Ces particules peuvent comprendre en outre des quantités résiduelles d'ions liés ou absorbés comme les ions de nitrate, d'acétate ou d'ammonium. Les tailles colloïdales font référence à des tailles de particule comprises entre 1 nm et 500 nm. Il faudrait noter que, dans la dispersion définie ci-dessus, le cérium peut être entièrement sous une forme colloïdale ou, simultanément, sous la forme d'ions et de colloïdes.

Le cérium est présent dans la dispersion, en général sous la forme d'un oxyde et/ou oxyde hydraté (hydroxyde) de cérium. Les particules de la dispersion de cérium ont une taille, de préférence, d'au plus 200 nm, plus préférablement d'au plus 100 nm. Cette taille peut être d'au plus 10 nm. Ces tailles sont mesurées par diffraction dynamique de la lumière (DLS), complétée, en option, si besoin est, par une diffraction de rayons X à petit angle (SAXS) et par une microscopie électronique à cryo-transmission (cryo-TEM). Un composé de cérium particulier et les sols et dispersions correspondants de ce dernier, bien adaptés à la présente invention et à la préparation de sols colloïdaux aqueux appropriés sont décrits dans le brevet américain 5 344 588, dont le contenu est incorporé à titre de référence dans la présente spécification.

Les dispersions colloïdales utilisées dans la présente invention présentent des caractéristiques spécifiques. Elles présentent une particule inorganique en conjonction avec un polymère hydrosoluble ou hydrodispersible particulier et une base qui peut être l'ammoniac ou une amine. Ce polymère interagit avec le cation de cérium par un genre quelconque de lien ou de liaison, y compris les liaisons de coordination, les liaisons ioniques ou électrostatiques. Par conséquent, le polymère peut être présent sur les particules du composé de cérium et/ou à l'intérieur des particules de cérium et/ou dans la phase aqueuse.

Les compositions de peintures aqueuses selon l'invention comprennent, dans la dispersion colloïdale de cérium, au moins un polymère hydrosoluble ou hydrodispersible.

Conformément à une première variante de l'invention, le polymère (i) hydrosoluble ou hydrodispersible est obtenu par la polymérisation d'au moins un monomère (I), lesdits monomères correspondant aux entités suivantes:
(I) : un acide ou un anhydride monocarboxylique ou polycarboxylique, linéaire ou ramifié, aliphatique, cyclique ou aromatique, à insaturation éthylénique.
Le monomère (I) correspond plus particulièrement à la formule suivante:

(R¹)(R¹)-C=C(R¹)-COOH (I)

dans laquelle les radicaux R¹, qui sont identiques ou différents, représente un atome d'hydrogène, un radical hydrocarboné en C₁-C₄ ayant en option un groupement -COOH group, ou un groupement -COOH.

Conformément à un mode de réalisation préféré de l'invention, le monomère de formule (I) est un acide monocarboxylique ou polycarboxylique, ou un anhydride carboxylique correspondant à la formule suivante:

(R¹)HC=C(R¹²)COOH

dans laquelle formule:
R¹¹ représente un atome d'hydrogène, un groupement -COOH ou un groupement -(CH₂)ₙ-COOH dans lequel n est compris entre 1 et 4, un radical C₁-C₄ alkyle;
R¹² représente un atome d'hydrogène, un groupement -(CH₂)ₘ-COOH dans lequel m est compris entre 1 et 4, un radical C₁-C₄ alkyle.

R¹¹, de préférence, représente un atome d'hydrogène, un groupement -COOH ou (CH₂)-COOH, un radical méthyle, ou un radical éthyle, et R¹² représente un atome d'hydrogène, un groupement -CH₂COOH ou un radical méthyle.

Conformément à un mode de réalisation plus spécifique, le monomère de la formule (I) est choisi parmi les acides ou les anhydrides acrylique, méthacrylique, citraconique, maléique, fumarique, itaconique ou crotonique.

Une partie du monomère (I), par exemple, allant jusqu'à 50% en moles, peut être remplacée par les monomères suivants:
- des monomères hydrophiles neutres comme l'acrylamide et ses dérivés (N-méthylacrylamide, N-isopropylacrylamide), le méthacrylamide, le méthacrylate de polyéthylèneglycol et l'acrylate de polyéthylèneglycol;
- des monomères hydrophiles anioniques: le 2-acrylamido-2-méthylpropanesulfonate de sodium (SAMPS), le styrènesulfonate de sodium et le vinylsulfonate de sodium.

Il est également possible d'utiliser de faibles quantités, par exemple, d'au plus 5% en moles, de monomères acides ou de leurs sels tels que:
- l'acide vinylsulfonique, l'acide 2-propène-1-sulfonique, l'acide méthallylsulfonique, le (méth)acrylate de sulfopropyle, l'acide styrènesulfonique ou l'acide acrylamidométhylpropanesulfonique,
- l'acide vinylbenzoïque,
- l'acide fumarique, l'acide itaconique, l'acide citraconique, l'acide maléique, leurs sels ou leurs anhydrides,
- l'acide vinylphosphonique.

Conformément à une deuxième variante, le polymère (i) est obtenu par polymérisation d'au moins un monomère (I) et au moins un monomère (II).

Quant au monomère (II), il correspond plus particulièrement à la formule suivante:

(R¹)(R¹)-C=C(R³)-C(O)-O-[CH₂CH(R⁴)O]ₘ-[CH(R⁵)-CH₂O]ₙ-R⁶

dans laquelle formule:
les radicaux R¹, qui sont identiques ou différents, sont définis comme ci-dessus,
R³ est un atome d'hydrogène ou un radical méthyle,
R⁴ et R⁵, qui sont identiques ou différents, représentent un atome d'hydrogène ou un radical alkyle contenant de 1 à 4 atomes de carbone,
R⁶ est un atome d'hydrogène, un radical alkyle, aryle, alkylaryle ou arylalkyle, contenant de 1 à 30, de préférence, de 1 à 8 atomes de carbone,
n est, par exemple, compris entre 2 et 100, de préférence, entre 6 et 100,
m est, par exemple, compris entre 0 et 50.

Parmi les monomères de ce type, qui peuvent être utilisés, on peut mentionner ceux décrits dans les brevets EP 705 854, US 4 138 381 ou US 4 384 096.

Le polymère (i) obtenu par réaction des monomères (I) et (II), est obtenu, de préférence, par une polymérisation à radicaux libres.

Le copolymère (i) ainsi obtenu a une structure "comb" avec, par exemple, un squelette en polyacrylate et des segments de polyoxyalkylène greffés sur ledit squelette.

Les polymères comb du deuxième mode de réalisation de l'invention sont bien connus d'un homme de métier. Ils peuvent être obtenus par des méthodes variées, comme, par exemple, la copolymérisation d'un monomère du type anionique avec un monomère ou un macro monomère non ionique ou, en solution de remplacement, par polymérisation d'un monomère de type anionique, suivie d'un greffage de chaînes non ioniques.

Le greffage de segments latéraux polymères sur un segment polymère de squelette peut être effectué conformément à des techniques classiques familières à un homme de métier (European Polymer Journal, 4, 343 (1968), par exemple).

Une mention particulière peut être faite, parmi ces techniques classiques, de celles auxquelles l'on fait référence sous le terme de greffage direct et de polymérisation.

Le greffage direct consiste à polymériser le ou les monomères choisi(s) par voie radicalaire en présence du polymère sélectionné pour former le squelette du produit final. Si la paire monomère/squelette et les conditions d'opération sont choisies avec soin, il peut alors y avoir une réaction de transfert entre le macro radical en cours de croissance et le squelette. Cette réaction crée un radical sur le squelette et c'est à partir de ce radical que le greffage progresse. Le radical primaire résultant de l'agent amorceur peut également contribuer aux réactions de transfert.

Pour sa part, la copolymérisation emploie, dans une première étape, le greffage à l'extrémité du segment non ionique d'un groupement fonctionnel qui peut être polymérisé par voie radicalaire. Ce greffage peut être effectué par des méthodes de chimie organique classiques. Ensuite, dans une deuxième étape, le macro monomère ainsi obtenu est polymérisé avec le monomère choisi pour former le squelette et un polymère auquel l'on fait référence sous le terme de polymère "comb" est obtenu.

Il est évident pour un homme de métier que, lorsqu'un macro monomère et un monomère, choisis de manière à ce que ces deux entités soient fortement combinées par des liaisons hydrogène, sont polymérisés, il y a alors simultanément greffage direct au segment polymère du macro monomère et incorporation de ce macro monomère dans la chaîne polymère par simple polymérisation de son extrémité polymérisable. Dans ce cas, la structure obtenue est substantiellement plus ramifiée ou même réticulée que ce n'était le cas dans les deux cas précédents.

Quelle que soit la méthode choisie, la polymérisation et le greffage ont lieu, de préférence, en phase aqueuse.

De plus, ils sont effectués de manière avantageuse en présence d'un agent amorceur de polymérisation, de préférence, d'un agent amorceur de polymérisation hydrosoluble. Ce dernier peut être choisi, en particulier parmi des peroxydes, comme des persulfates de métaux alcalins ou d'ammonium, l'azobis(acide cyanovalérique), l'azobis(hydrochlorure de méthylpropionamide), et similaires.

Il est spécifié que la masse moléculaire du polymère ainsi que les proportions respectives des monomères (I), et (II), en fonction de leur présence, sont telles que le polymère résultant ne précipite pas lorsqu'il est en solution aqueuse.

Plus particulièrement, le monomère (I) est choisi parmi les acides ou les anhydrides acrylique, méthacrylique, citraconique, maléique, fumarique, itaconique et crotonique et, en termes généraux, a la même définition que celle donnée ci-dessus pour le polymère (i) de la première variante.

Les polymères (i) peuvent, en plus, comprendre de faibles quantités de, par exemple, au plus 10% en moles d'unités correspondant à des monomères non ioniques mono éthyléniquement insaturés (III).

Parmi les monomères non ioniques mono éthyléniquement insaturés (III), on peut mentionner:
∘ des monomères vinylaromatiques comme le styrène, le vinyltoluène,
∘ des esters C₁-C₂₀ alkyle d'acides qui sont α-β-éthyléniquement insaturés, tels que des acrylates ou des méthacrylates de méthyle, d'éthyle ou de butyle,
∘ des esters vinyliques ou allyliques d'acides qui sont α-β-éthyléniquement insaturés, comme des acétates ou des propionates de vinyle ou d'allyle,
∘ des halogénures de vinyle ou de vinylidène comme le chlorure de vinyle ou de vinylidène,
∘ des nitriles α-β-éthyléniquement insaturés, comme l'acrylonitrile,
∘ des esters hydroxyalkyle d'acides qui sont α-β-éthyléniquement insaturés, comme des acrylates ou des méthacrylates d'hydroxyéthyle ou d'hydroxypropyle,
∘ des amides α-β-éthyléniquement insaturés, comme l'acrylamide ou le méthacrylamide.

Si des monomères de ce genre sont présents, la polymérisation a lieu en leur présence et leur quantité et leur nature sont sélectionnées de manière à obtenir un copolymère résultant soluble ou dispersible dans l'eau.

Conformément à un mode de réalisation particulier de la présente invention, un acide organique ou le sel de ce dernier est ajouté à la dispersion de cérium conjointement au polymère hydrosoluble ou hydrodispersible. Les acides organiques utilisables et les sels de ces derniers sont ceux enseignés par le brevet WO 03/099942 cité ci-dessus, dont le contenu est incorporé à titre de référence dans la présente spécification.

Ces acides appropriés ont au moins trois fonctions acides par molécule et le troisième pK et au plus égal à 10.

L'acide citrique est particulièrement approprié.

Le rapport molaire entre les moles acides totales du polymère hydrosoluble ou hydrodispersible et, en option l'acide organique et les moles d'atomes de cérium totaux peut varier dans une large gamme et est plus particulièrement compris entre 0,001 et 5,0, plus préférablement entre 0,1 et 1,5. Les atomes de cérium totaux comprennent les atomes de cérium de surface et les atomes au sein de la masse de la particule non exposée à la surface. Ce rapport dépend de la taille des particules dans la dispersion, le rapport ayant une valeur plus faible lorsque la taille des particules augmente.

La peinture aqueuse comprend en outre une base (3) qui peut être un composé quelconque basique du point de vue chimique, compatible avec la composition de peinture. La base (3) est ajoutée pour augmenter et/ou pour ajuster le pH de la composition de peinture. Elle peut être l'ammoniaque aqueuse mais aussi une amine. Par exemple, la base (3) peut être un type quelconque d'amine, primaire, secondaire ou tertiaire. On notera qu'il est possible d'utiliser des amino alcools, comme, par exemple, le 2-amino-2-méthyl-1-propanol.

La composition de peinture aqueuse de l'invention présente un pH compris entre 5 et 14, de préférence, entre 7 et 9, lorsqu'il n'y a pas de monomère (II) dans le polymère (i) et/ou lorsqu'il y a un acide organique ou le sel de ce dernier, ayant au moins trois fonctions acides par molécule et dont le troisième pK est au plus égal à 10.

La composition de peinture aqueuse de l'invention présente un pH qui peut varier entre 1 et 14, lorsqu'il y a un monomère (II) copolymérisé avec le monomère (I) dans le polymère(i).

La préparation de la composition de peinture aqueuse comprend l'étape de mélange de la dispersion colloïdale avec la peinture, plus particulièrement avec la laque ou le vernis et la base.

Conformément à la première variante de la présente invention, plus particulièrement lorsque le polymère hydrosoluble ou hydrodispersible est, par exemple, un polymère d'acide polyacrylique avec ou sans l'acide organique, par exemple, l'acide citrique, il est recommandé d'effectuer la préparation de la composition de peinture comme suit:
a) dans une première étape, le polymère d'acide polyacrylique, avec ou sans l'acide organique, est ajouté au sol ou à la dispersion de cérium de départ, le pH du mélange résultant étant acide, plus particulièrement autour de 1-2. Une précipitation des composés de cérium fait son apparition.
b) dans une deuxième étape, le précipité obtenu est solubilisé en ajoutant une base au précipité de manière à augmenter le pH au-dessus de 5, de préférence, autour de 7 ou au-dessus. A ce moment là, le précipité se dissout et l'on obtient une dispersion claire du composé de cérium.
c) dans une troisième étape, la peinture est ajoutée à la dispersion obtenue dans l'étape b), avec pour résultat une composition de peinture aqueuse stable et qui ne se colore pas à la suite du stockage.

Le même procédé peut être utilisé dans la deuxième variante de la présente invention, lorsque le polymère hydrosoluble ou hydrodispersible est, par exemple, un copolymère acide polyacrylique/polyoxyalcène, avec ou sans l'acide organique. Cette deuxième variante, avec ou sans l'utilisation de l'acide organique, fournit toutefois, la plupart du temps, l'avantage supplémentaire qu'aucune précipitation ne se produit lors de l'étape a), plus particulièrement lorsque le squelette polyacrylique du copolymère est petit. Le pH de la composition ainsi obtenue peut être varié entre le pH 1 et le pH 14. La composition de peinture aqueuse ainsi obtenue est également stable lors du stockage.

La quantité de dispersion ajoutée à la peinture dépend du taux final d'oxyde de cérium voulu dans la composition. Ce taux peut varier dans une large mesure. Il est possible d'utiliser des quantités relativement grandes de cérium sans perturber la résistance à l'eau ou la résistance mécanique de la peinture. En général, la dispersion colloïdale ajoutée a une quantité en poids d'oxyde de cérium d'au plus 25%, de préférence, d'au plus 50% et encore plus préférablement d'au plus 3%, sur la base du poids total de la composition. Une quantité de ce genre est suffisante pour obtenir une peinture, une laque ou un vernis fournissant une bonne protection au substrat, par exemple, à du bois, contre les rayons UV pendant une période de temps prolongée.

Les exemples suivants illustrent l'invention plus en détails, référence étant faite au dessin ci-joint où:
la figure 1 montre une comparaison en couleur de deux flacons de dispersion de cérium, avec et sans acide polyacrylique;
la figure 2 montre la coloration des flacons avec complexation d'un nano sol dilué oxyde cérique - nitrate et d'un complexe avec l'acide citrique et le graphique montre les spectres d'absorption UV-Vis de complexes d'oxyde cérique avec des concentrations nominales équivalentes d'oxyde cérique; et
La figure 3 illustre la stabilité comparative des complexes de CeO₂ en cas d'exposition à la lumière laser.

### EXEMPLE 1:

Cet exemple se rapporte à la préparation d'une composition d'une dispersion colloïdale de cérium stabilisée par complexation avec l'acide poly(acrylique) (PAA). Il y a une amélioration significative en termes de couleur et de stabilité vis-à-vis de la dégradation en présence d'UV/de lumière ambiante de ce dernier, par comparaison avec les complexes avec l'acide citrique.

Un processus de précipitation - re-dispersion (P-R) est central à la complexation de l'oxyde cérique cationique avec le PAA pour prolonger le domaine de la stabilité de pH. On peut utiliser l'acide poly(acrylique) d'une masse molaire moyenne au poids de 2000 g/mole correspondant à un degré de polymérisation de 28 monomères d'acide acrylique et à une polydispersité de 1,74. Le sol de nano particules d'oxyde cérique est préparé en suivant le processus conformément à l'exemple 1 du brevet américain 5 344 588, cité ici à titre de référence, et dilué à l'aide d'eau déminéralisée pour donner une dispersion de 50 g/L dans l'eau à un pH de 1,5. Cette dispersion est diluée en outre dans de l'acide nitrique de pH 1,5 à une concentration de 10 g/l. Une solution de concentration similaire (10 g/L) de PAA dans l'acide nitrique au même pH (=1,5) est également préparée.

Un volume égal de sol d'oxyde cérique (pH 1,5; 10 g/L) est ajouté lentement à la solution de PAA (pH 1,5; 10 g/L) à une vitesse de dosage de 2 mL/minute sous agitation à 200-300 tours par minute. Comme avec l'acide citrique, la solution devient trouble, ce qui conduit à la formation d'un précipité qui se dépose rapidement au fond si l'agitation est interrompue. La suspension est encore agitée et homogénéisée pendant 60 minutes. Le rapport massique X= masse_{particules} / masse_{polymère} =1 est utilisé pour cette composition. La suspension est alors centrifugée à 15000 tours par minute pendant 15 minutes et le surnageant est décanté pour donner un précipité jaune-blanchâtre. Une partie aliquote de solution aqueuse d'hydroxyde d'ammonium à une concentration de 5M est alors lentement ajoutée sur le précipité et agitée avec ménagement dans un agitateur secoueur pendant approximativement 30 minutes. Le précipité se redissout à un pH élevé, en donnant une dispersion relativement concentrée de nano particules d'oxyde cérique revêtues de PAA. La solution aqueuse d'hydroxyde d'ammonium ajoutée est suffisante (approximativement 0,25 g par gramme de précipité) pour donner une solution finale redispersée de particules à un pH final de 10.

Les résultats de diffraction lumineuse montrent que la taille des particules re-dispersées correspond à une dispersion colloïdale mono dispersée de 13-18 nm. La concentration finale de la composition est de 175 g/L. Le sol contient des particules stabilisées complexées à l'aide de PAA, de PAA libre, d'ions de nitrate et d'ammonium libres.

On observe immédiatement que le sol re-dispersé est d'un jaune légèrement plus clair en couleur lors de la comparaison avec les complexes d'acide citrique obtenus conformément aux protocoles similaires à la description dans le brevet WO 03/099942, qui sont de couleur ambre. Les complexes CeO₂-acide citrique sont disponibles en tant que sols à 208 g/L, pH 9.

### Stabilité de couleur en lumière ambiante:

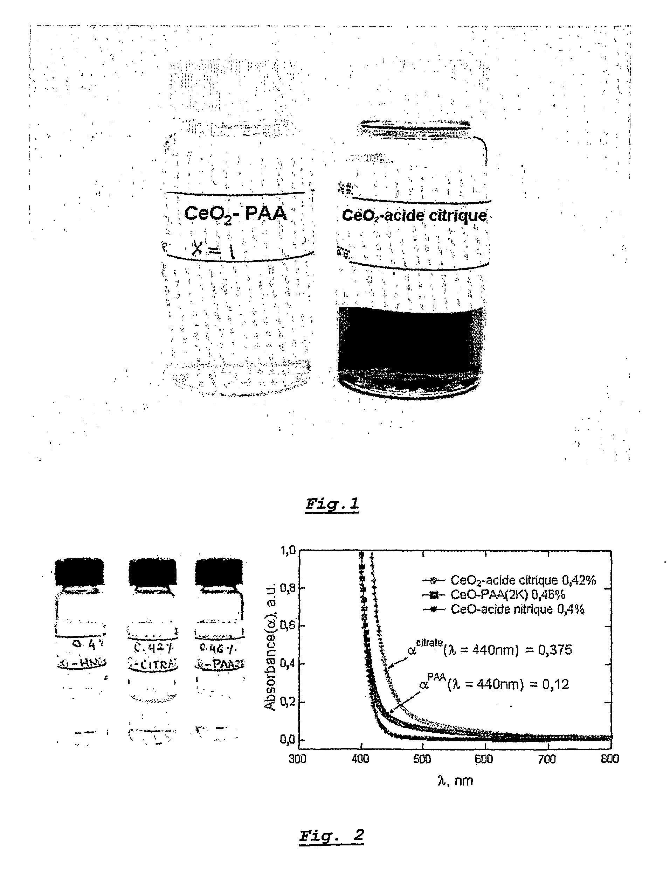

On observe en outre également que l'exposition du cérium colloïdal complexé à l'aide d'acide citrique à la lumière ambiante, en cas de stockage sur la paillasse, a pour résultat un changement significatif en couleur allant d'ambre au brun sombre pendant une période d'approximativement un mois. La solution de nano particules d'oxyde cérique complexé à l'aide d'acide citrique ne peut, par conséquent, pas être stockée en lumière ambiante. Les complexes de cérium colloïdal obtenus à l'aide de PAA, d'autre part, restent largement non perturbés. Une comparaison auto-convaincante en termes de couleur est soulignée dans la figure 1 ci-dessous, dans laquelle le flacon de gauche avec le sol concentré CeO₂-PAA(2K) (175 g/L; pH 10) préparé par P-R à X=1 [PAA]=1%, a des différences frappantes en couleur lors de la comparaison au flacon de droite avec le sol CeO₂-acide citrique (200 g/L; pH 9) stocké en lumière ambiante sur la paillasse pendant 1 mois.

Des dilutions de complexes de ce genre examinées par spectroscopie UV-Vis suggèrent que des différences en complexation de surface changent apparemment les spectres d'absorption UV-Vis d'une manière significative. L'absorbance dans la région bleue (λ = 440) pour le CeO₂-citrate (=0,375) stocké en lumière ambiante est plus élevée que pour le CeO₂-PAA (=0,12) par un facteur de 3 et comme indiqué dans la Figure 2 ci-dessous. Elle montre une comparaison de coloration avec complexation entre un nano sol dilué oxyde cérique - nitrate (pH 1.5) (flacon de gauche), un complexe avec l'acide citrique et l'oxyde cérique complexé avec le PAA(2K) (pH 10) (flacon de droite). On observe un jaunissement significatif de l'oxyde cérique avec l'acide citrique. Le graphique en figure 2 montre les spectres d'absorption UV-Vis des complexes d'oxyde cérique avec des concentrations nominales équivalentes d'oxyde cérique. Toutes les concentrations sont des fractions massiques en pour cent de l'oxyde cérique seul.

### Stabilité en cas d'exposition à la lumière laser:

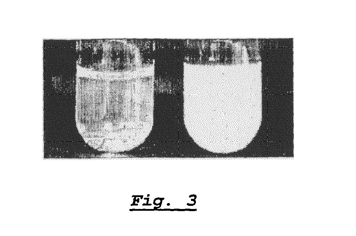

Au lieu d'un large spectre de longueurs d'onde en lumière ambiante, des complexes de nano particules d'oxyde cérique préparés de manière similaire avec le PAA et avec l'acide citrique sont dilués et comparés en cas d'exposition à un faisceau laser à faible intensité à une longueur d'onde spécifique (λ = 488 nm; couleur bleue). Bien que la couleur initiale d'un complexe non exposé PAA et acide citrique soit similaire, un sol frais CeO₂-acide citrique (208 g/L; pH 9) commence à se décolorer rapidement à la suite de l'exposition au faisceau laser et précipite finalement en cas d'exposition prolongée comme indiqué dans la figure 3 ci-dessous. Les complexes oxyde cérique - PAA sont stables indéfiniment.

La figure 3 illustre la stabilité comparative des complexes de CeO₂ en cas d'exposition à la lumière laser pendant 3,5 heures (λ=488 nm, 60 mW). Le sol CeO₂-acide citrique (208 g/L; pH 9) (flacon de droite) se déstabilise et précipite dans le faisceau laser par comparaison au complexe CeO₂-PAA qui reste stable et clair (flacon de gauche). [CeO₂] = 20 g/L; pH ∼ 7; [NaNO₃] = 0,75 N.

### EXEMPLE 2:

Cet exemple se rapporte à la préparation d'une composition d'une dispersion colloïdale de nano particules de cérium stabilisées par complexation à l'aide de "polymères comb", comprenant un squelette de PAA anionique court et des chaînes latérales pendantes neutre de poly(oxyde d'éthylène) (POE). Deux genres de polymères comb sont utilisés à cet effet, désignés désormais en tant que PAA-PEO₁ et PAA-PEO₂, dont la composition est indiquée dans le TABLEAU 1 ci-dessous.

**TABLEAU 1**

| Polymère comb | Masse molaire du squel. PAA (g/mole) | Masse molaire des chaînes latérales de PEO(g/mole) | Nombre moyen de chaînes latérales de PEO par molecule |
|---|---|---|---|
| PAA-PEO₁ | 2400 | 1000 | 24 |
| PAA-PEO₂ | 7100 | 1000 | 12 |

Les complexes avec les particules de cérium sont faits par mélange simple avec ces deux polymères pour des rapports différents X = Masse_{particules}/Mass_{polymère} au pH de 1,5 et à une concentration solide totale de 0,2 % en poids. Le pH de la solution est alors augmenté par la suite jusqu'au pH de 10 par addition d'une solution d'hydroxyde d'ammonium.

La complexation du PAA-PEO₁ (squelette de PAA à masse molaire inférieure) au pH de 1,5 a eu pour résultat des solutions transparentes claires n'ayant aucune turbidité observable visuellement pour X > 0,1. Des solutions troubles sont observées dans le cas d'un grand excès de PAA-PEO₁. En augmentant le pH à l'aide de NH₄OH jusqu'à 10, les solutions sont claires et transparentes, sauf pour X = 1,6. La taille des nano particules obtenues par DLS et la turbidité pour des valeurs de X différentes au pH de 1,5 et au pH de 10 sont indiqués dans le TABLEAU 2 ci-dessous.

**TABLEAU 2**

| PAA-PEO₁ | | | | |
|---|---|---|---|---|
| X | Taille de particule (nm) au pH de 1,5 | État physique au pH de 1,5 | Taille de particule (nm) au pH de 10 | État physique au pH de 10 |
| 0,01 | - | Précipité | 149 | Sol clair |
| 0,1 | - | Précipité | 84 | Sol clair |
| 0,2 | 52 | Sol clair | 62 | Sol clair |
| 0,4 | 28 | Sol clair | 29 | Sol clair |
| 0,8 | 26 | Sol clair | 22 | Sol clair |
| 1,6 | 38 | Sol clair | - | Trouble |

Les mesures du diamètre hydrodynamique par la méthode DLS et correspondant à la complexation entre les nano particules de cérium et le PAA-PEO₂ sont rassemblées dans le TABLEAU 3 ci-dessous. Le polymère comb de PAA-PEO₂ est fait principalement du squelette de PAA avec des caractéristiques de complexation similaires à celles observées avec l'homopolymère de PAA . Au pH de 1,5, une précipitation se produit, sauf pour X>0,8 (correspondant à 26 molécules de PAA-PEO₂ par particule). Par addition d'une solution d'ammoniac, le mélange trouble se redisperse et donne des solutions claires faites d'agrégats allant de 50 nm à 140 nm en fonction de X.

Les données obtenues sont rassemblées dans le tableau 3:

**TABLEAU 3**

| PAA-PEO₂ | | | | |
|---|---|---|---|---|
| X | Taille de particule (nm) au pH de 1,5 | État physique au pH de 1,5 | Taille de particule (nm) au pH de 10 | État physique au pH de 10 |
| 0,01 | - | Précipité | 133 | Sol clair |
| 0,1 | - | Précipité | 94 | Sol clair |
| 0,2 | - | Précipité | 107 | Sol clair |
| 0,4 | - | Précipité | 80 | Sol clair |
| 0,8 | 57 | Sol clair | 48 | Sol clapir |
| 1,6 | 50 | Sol clair | - | Trouble |

Il ressort du tableau 3 ci-dessus qu'en dépit de leur grande taille, ces complexes sont stables deux mois après leur complexation et manifestent une coloration ambre claire. Ces complexes semblent également être stables à la dégradation en couleur à la suite d'une exposition à la lumière ambiante au cours du temps ou à des faisceaux de laser intenses.

La complexation avec des combs PAA-PEO avec un squelette court de PAA (PAA-PEO₁) a pour résultat des dispersions de nano particules individuelles avec une corona neutre de PEO. Ceci offre des avantages de traitement critiques supplémentaires en évitant complètement le besoin d'une précipitation - re-dispersion qui est critique pour les acides polyfonctionnels seuls.

## Revendications

1. Composition aqueuse de peinture comprenant un mélange:
(1) d'une peinture aqueuse;
(2) d'une dispersion colloïdale d'un composé du cérium comprenant un polymère (i) hydrosoluble ou hydrodispersible formant un complexe avec le cérium et obtenu par polymérisation d'au moins un monomère (I) correspondant à:
(I): un acide ou un anhydride monocarboxylique ou polycarboxylique, linéaire ou ramifié, aliphatique, cyclique ou aromatique, à insaturation éthylénique ; et, en option,
un monomère (II) correspondant à:
(II) : un ester polyoxyalkyléné d'un acide carboxylique à insaturation éthylénique; ou
obtenu à partir de la polymérisation d'au moins un acide ou un anhydride monocarboxylique ou polycarboxylique, linéaire ou ramifié, aliphatique, cyclique ou aromatique, à insaturation éthylénique; et
(3) une base.

2. Composition selon la revendication 1, dans laquelle la dispersion colloïdale (2) comprend en outre un acide organique ou le sel de ce dernier, ayant au moins trois fonctions acides par molécule et dont le troisième pK est au plus égal à 10.

3. Composition selon la revendication 2, dans laquelle l'acide organique est l'acide citrique.

4. Composition selon l'une quelconque des revendications précédentes, dans laquelle le polymère (i) est dérivé de la polymérisation:
d'au moins un monomère de la formule (I):
(R¹)(R¹)-C=C(R¹)-COOH (I)
dans laquelle formule:
les radicaux R¹, qui sont identiques ou différents, représentent un atome d'hydrogène, un radical hydrocarboné en C₁-C_{4.} comprenant en option un groupement -COOH, un groupement -COOH ; et, en option
d'au moins un monomère de la formule (II):
(R¹)(R¹-C=C(R³)-C(O)-O-[CH₂CH(R⁴)O]ₘ-[CH(R⁵)-CH₂O]ₙ-R⁶
dans laquelle formule:
les radicaux R¹, qui sont identiques ou différents, sont définis comme ci-dessus,
R³ est un atome d'hydrogène ou un radical méthyle,
R⁴ et R⁵, qui sont identiques ou différents, représentent un atome d'hydrogène ou un radical alkyle contenant de 1 à 4 atomes de carbone,
R⁶ est un atome d'hydrogène, un radical alkyle, aryle, alkylaryle ou arylalkyle, contenant de 1 à 30, de préférence, de 8 à 30 atomes de carbone,
n est compris entre 2 et 100, de préférence, entre 6 et 100, et m est compris entre 0 et 50.

5. Composition selon l'une quelconque des revendications 1 à 4, dans laquelle le monomère (I) du polymère (i) est un acide monocarboxylique ou polycarboxylique ou un anhydride carboxylique correspondant à la formule suivante:
(R¹¹)HC-C(R¹²)COOH
dans laquelle
R¹¹ représente un atome d'hydrogène, un groupement -COOH ou un groupement -(CH₂)ₙ-COOH dans lequel n est compris entre 1 et 4, un radical C₁-C₄ alkyle; R¹² représente un atome d'hydrogène, un groupement -(CH₂)ₘ-COOH dans lequel n est compris entre 1 et 4, un radical C₁-C₄ alkyle.

6. Composition selon la revendication 5, dans laquelle le polymère (i) est dérivé de la polymérisation:
d'au moins un monomère de la formule (I):
(R¹)(R¹)-C=C(R¹)-COOH (I)
dans laquelle les radicaux R¹, qui sont identiques ou différents, représente un atome d'hydrogène, un radical méthyle, éthyle, ayant en option un groupement -COOH, ou un groupement -COOH.

7. Composition selon la revendication 6, dans laquelle le monomère (I) du polymère (i) est tel que le radical R¹¹ représente un atome d'hydrogène, un groupement -COOH ou -(CH₂)-COOH, un radical méthyle, un radical éthyle, et dans laquelle le radical R¹² représente un atome d'hydrogène, un groupement -CH₂-COOH ou un radical méthyle.

8. Composition selon l'une quelconque des revendications précédentes, dans laquelle le monomère (I) du polymère (i) contient en outre l'acrylamide, (le N-méthylacrylamide, le N-isopropylacrylamide), le méthacrylamide, le méthacrylate du polyéthylèneglycol, l'acrylate du polyéthylèneglycol, le 2-acrylamido-2-méthylpropanesulfonate de sodium (SAMPS), le styrènesulfonate de sodium ou le vinylsulfonate de sodium.

9. Composition selon l'une quelconque des revendications précédentes, dans laquelle le monomère (I) du polymère (i) est l'acide acrylique, méthacrylique, citraconique, maléique, fumarique, itaconique ou crotonique ou les anhydrides de ces derniers.

10. Composition selon l'une quelconque des revendications précédentes, dans laquelle le monomère (I) est partiellement remplacé par (III) un monomère vinylaromatique, un ester C₁-C₂₀ alkyle d'un acide α-β-éthyléniquement insaturé, un ester vinylique ou allylique d'un acide α-β-éthyléniquement insaturé, un halogénure de vinyle ou de vinylidène, un nitrile α-β-éthyléniquement insaturé, un ester hydroxyalkyle d'un acide α-β-éthyléniquement insaturé, ou un amide α-β-éthyléniquement insaturé.

11. Composition selon la revendication 10, dans laquelle le monomère (III) est le styrène, le vinyltoluène, l'acrylate ou le méthacrylate de méthyle, d'éthyle ou de butyle, l'acétate ou le propionate de vinyle ou d'allyle, le chlorure de vinyle ou de vinylidène, l'acrylonitrile, les acrylates ou les méthacrylates d'hydroxyéthyle ou d'hydroxypropyle, l'acrylamide ou le méthacrylamide.

12. Composition selon l'une quelconque des revendications précédentes, dans laquelle le polymère (i) est dérivé de la polymérisation de l'anhydride maléique.

13. Composition selon l'une quelconque des revendications précédentes, dans laquelle la base (3) est l'ammoniac ou une amine.

14. Composition selon l'une quelconque des revendications précédentes, dans laquelle la peinture est une laque réticulable sous l'effet d'un rayonnement UV.

15. Composition selon l'une quelconque des revendications précédentes, ayant un pH compris entre 5 et 14, de préférence, entre 7 et 9, lorsqu'il n'y a aucun monomère (II) dans le polymère (i).

16. Composition selon l'une quelconque des revendications 1 à 14, ayant un pH compris entre 1 et 14, lorsque le polymère (i) est dérivé d'un monomère (I) copolymérisé avec un monomère (II).

17. Composition selon l'une quelconque des revendications 2 à 14, ayant un pH compris entre 5 et 14, de préférence, entre 7 et 9, lorsque ladite composition comprend en outre un acide organique ou le sel de ce dernier, ayant au moins trois fonctions acides par molécule et dont le troisième pK est au plus égal à 10.

18. Composition selon l'une quelconque des revendications précédentes, dans laquelle le rapport molaire entre les moles d'acide du polymère hydrosoluble ou hydrodispersible et les moles des atomes de cérium totaux de la dispersion est compris entre 0,001 et 5,0.

19. Composition selon la revendication 18, dans laquelle le rapport molaire est compris entre 0,1 et 1,5.

20. Composition selon l'une quelconque des revendications précédentes, dans laquelle la taille des particules de la dispersion colloïdale est d'au plus 200 nm.

21. Composition selon la revendication 19, dans laquelle la taille des particules de la dispersion colloïdale est d'au plus 10 nm.

22. Procédé en vue de la préparation d'une composition de peinture aqueuse, telle qu'elle est définie dans l'une quelconque des revendications précédentes, comprenant l'étape de mélange de la dispersion colloïdale avec la peinture et la base.

23. Procédé selon la revendication 22, dans lequel la dispersion est ajoutée à la peinture, de manière à fournir une quantité en poids d'oxyde de cérium d'au plus 50%, sur la base du poids total de la composition.

## Patentansprüche

1. Wässrige Anstrichmittelzusammensetzung, umfassend eine Mischung:
(1) eines wässrigen Anstrichmittels;
(2) einer kolloidalen Dispersion einer Cerverbindung, umfassend ein mit dem Cer einen Komplex bildendes wasserlösliches oder wasserdispergierbares Polymer (i), erhalten durch Polymerisation mindestens eines Monomers (I) entsprechend:
(I): einer ethylenisch ungesättigten, linearen oder verzweigten, aliphatischen, cyclischen oder aromatischen Monocarbonsäure oder Polycarbonsäure oder einem Anhydrid davon und gegebenenfalls eines Monomers (II) entsprechend:
(II): einem polyoxyalkylenierten Ester einer ethylenisch ungesättigten Carbonsäure; oder erhalten aus der Polymerisation mindestens einer ethylenisch ungesättigten, linearen oder verzweigten, aliphatischen, cyclischen oder aromatischen Monocarbonsäure oder Polycarbonsäure oder einem Anhydrid davon; und
(3) einer Base.

2. Zusammensetzung nach Anspruch 1, wobei die kolloidale Dispersion (2) außerdem eine organische Säure oder das Salz dieser Säure, die mindestens drei Säurefunktionen pro Molekül aufweist und deren dritter pK-Wert höchstens gleich 10 ist, umfasst.

3. Zusammensetzung nach Anspruch 2, wobei es sich bei der organischen Säure um Citronensäure handelt.

4. Zusammensetzung nach einem der vorhergehenden Ansprüche, wobei sich das Polymer (i) aus der Polymerisation:
mindestens eines Monomers der Formel (I):
(R¹)(R¹)-C=C(R¹)-COOH (I)
worin:
die Reste R¹ gleich oder verschieden sind und für ein Wasserstoffatom, einen C₁-C₄-Kohlenwasserstoffrest, der gegebenenfalls eine -COOH-Gruppe umfasst, oder eine -COOH-Gruppe stehen; und gegebenenfalls
mindestens eines Monomers der Formel (II):
(R¹)(R¹-C=C(R³)-C(O)-O-[CH₂CH(R⁴)O]ₘ-[CH(R⁵)-CH₂O]ₙ-R⁶
worin:
die Reste R¹ gleich oder verschieden sind und wie oben definiert sind,
R³ für ein Wasserstoffatom oder einen Methylrest steht,
R⁴ und R⁵ gleich oder verschieden sind und für ein Wasserstoffatom oder einen Alkylrest mit 1 bis 4 Kohlenstoffatomen stehen,
R⁶ für ein Wasserstoffatom oder einen Alkyl-, Aryl-, Alkylaryl- oder Arylalkylrest mit 1 bis 30 vorzugsweise 8 bis 30 Kohlenstoffatomen steht,
n zwischen 2 und 100 und vorzugsweise zwischen 6 und 100 liegt und m zwischen 0 und 50 liegt,
ergibt.

5. Zusammensetzung nach einem der Ansprüche 1 bis 4, wobei es sich bei dem Monomer (I) des Polymers (i) um eine Monocarbonsäure oder Polycarbonsäure oder ein Carbonsäureanhydrid der folgenden Formel handelt:
(R¹¹)HC=C(R¹²)COOH
worin
R¹¹ für ein Wasserstoffatom, eine -COOH-Gruppe oder eine -(CH₂)ₙ-COOH-Gruppe, worin n zwischen 1 und 4 liegt, oder einen C₁-C₄-Alkylrest steht; R¹² für ein Wasserstoffatom, eine -(CH₂)ₘ-COOH-Gruppe, worin n zwischen 1 und 4 liegt, oder einen C₁-C₄-Alkylrest steht.

6. Zusammensetzung nach Anspruch 5, wobei sich das Polymer (i) aus der Polymerisation:
mindestens eines Monomers der Formel (I):
(R¹)(R¹)-C=C(R¹)-COOH (I)
worin:
die Reste R¹ gleich oder verschieden sind und für ein Wasserstoffatom, einen Methyl- oder Ethylrest, der gegebenenfalls eine -COOH-Gruppe aufweist, oder eine -COOH-Gruppe stehen,
ergibt.

7. Zusammensetzung nach Anspruch 6, wobei das Monomer (I) des Polymers (i) so beschaffen ist, dass der Rest R¹¹ für ein Wasserstoffatom, eine -COOH- oder -(CH₂)-COOH-Gruppe, einen Methylrest oder einen Ethylrest steht, und wobei der Rest R¹² für ein Wasserstoffatom, eine -(CH₂)-COOH-Gruppe oder einen Methylrest steht.

8. Zusammensetzung nach einem der vorhergehenden Ansprüche, wobei das Monomer (I) des Polymers (i) außerdem Acrylamid, (N-Methylacrylamid, N-Isopropylacrylamid), Methacrylamid, Polyethylenglykolmethacrylat, Polyethylenglykolacrylat, Natrium-2-acrylamido-2-methylpropansulfonat (SAMPS), Natriumstyrolsulfonat oder Natriumvinylsulfonat enthält.

9. Zusammensetzung nach einem der vorhergehenden Ansprüche, wobei es sich bei dem Monomer (I) des Polymers (i) um Acrylsäure, Methacrylsäure, Citraconsäure, Maleinsäure, Fumarsäure, Itaconsäure oder Crotonsäure oder deren Anhydride handelt.

10. Zusammensetzung nach einem der vorhergehenden Ansprüche, wobei das Monomer (I) teilweise durch (III) ein vinylaromatisches Monomer, einen C₁-C₂₀-Alkylester einer α,β-ethylenisch ungesättigten Säure, einen Vinyl- oder Allylester einer α,β-ethylenisch ungesättigten Säure, ein Vinyl- oder Vinylidenhalogenid, ein α,β-ethylenisch ungesättigtes Nitril, einen Hydroxyalkylester einer α,β-ethylenisch ungesättigten Säure oder ein α,β-ethylenisch ungesättigtes Amid ersetzt ist.

11. Zusammensetzung nach Anspruch 10, wobei es sich bei dem Monomer (III) um Styrol, Vinyltoluol, Methyl-, Ethyl- oder Butylacrylat oder -methacrylat, Vinyl- oder Allylacetat oder -propionat, Vinyl- oder Vinylidenchlorid, Acrylnitril, Hydroxyethyl- oder Hydroxypropylacrylat oder -methacrylat, Acrylamid oder Methacrylamid handelt.

12. Zusammensetzung nach einem der vorhergehenden Ansprüche, wobei sich das Polymer (i) aus der Polymerisation von Maleinsäureanhydrid ergibt.

13. Zusammensetzung nach einem der vorhergehenden Ansprüche, wobei es sich bei der Base (3) um Ammoniak oder ein Amin handelt.

14. Zusammensetzung nach einem der vorhergehenden Ansprüche, wobei es sich bei dem Anstrichmittel um einen unter UV-Strahlung vernetzbaren Lack handelt.

15. Zusammensetzung nach einem der vorhergehenden Ansprüche mit einem pH-Wert zwischen 5 und 14 und vorzugsweise zwischen 7 und 9, wenn in dem Polymer (i) kein Monomer (II) vorliegt.

16. Zusammensetzung nach einem der Ansprüche 1 bis 14 mit einem pH-Wert zwischen 1 und 14, wenn sich das Polymer (i) von einem mit einem Monomer (II) copolymerisierten Monomer (I) ableitet.

17. Zusammensetzung nach einem der Ansprüche 2 bis 14 mit einem pH-Wert zwischen 5 und 14 und vorzugsweise zwischen 7 und 9, wenn die Zusammensetzung außerdem eine organische Säure oder das Salz dieser Säure, die mindestens drei Säurefunktionen pro Molekül aufweist und deren dritter pK-Wert höchstens gleich 10 ist, umfasst.

18. Zusammensetzung nach einem der vorhergehenden Ansprüche, wobei das Molverhältnis zwischen den Molen der Säure des wasserlöslichen oder wasserdispergierbaren Polymers und den Molen der gesamten Ceratome der Dispersion zwischen 0,001 und 5,0 liegt.

19. Zusammensetzung nach Anspruch 18, wobei das Molverhältnis zwischen 0,1 und 1,5 liegt.

20. Zusammensetzung nach einem der vorhergehenden Ansprüche, wobei die Teilchengröße der kolloidalen Dispersion höchstens 200 nm beträgt.

21. Zusammensetzung nach Anspruch 19, wobei die Teilchengröße der kolloidalen Dispersion höchstens 10 nm beträgt.

22. Verfahren zur Herstellung einer wässrigen Anstrichmittelzusammensetzung gemäß einem der vorhergehenden Ansprüche, bei dem man die kolloidale Dispersion mit dem Anstrichmittel und der Base mischt.

23. Verfahren nach Anspruch 22, bei dem man die Dispersion so zu dem Anstrichmittel gibt, dass eine Ceroxid-Menge von höchstens 50 Gew.-%, bezogen auf das Gesamtgewicht der Zusammensetzung, bereitgestellt wird.

## Claims

1. Aqueous paint composition comprising a mixture:
(1) of an aqueous paint;
(2) of a colloidal dispersion of a cerium compound comprising a water-soluble or water-dispersible polymer (i) forming a complex with the cerium and obtained by polymerization of at least one monomer (I) corresponding to:
(I): an ethylenically unsaturated, aromatic or linear, branched or cyclic aliphatic monocarboxylic or polycarboxylic acid or anhydride; and, optionally,
a monomer (II) corresponding to:
(II): a polyoxyalkylenated ester of an ethylenically unsaturated carboxylic acid; or
obtained from the polymerization of at least one ethylenically unsaturated, aromatic or linear, branched or cyclic aliphatic monocarboxylic or polycarboxylic acid or anhydride; and
(3) a base.

2. Composition according to Claim 1, in which the colloidal dispersion (2) also comprises an organic acid or the salt of the latter, having at least three acid functions per molecule and the third pK of which is at most equal to 10.

3. Composition according to Claim 2, in which the organic acid is citric acid.

4. Composition according to any one of the preceding claims, in which the polymer (i) is derived from the polymerization:
of at least one monomer of formula (I):
**(R¹)(R¹)-C=C(R¹)-COOH** **(I)**
in which formula:
the R¹ radicals, which are identical or different, represent a hydrogen atom, a C₁-C₄ hydrocarbon-based radical optionally comprising a -COOH group, or a -COOH group; and, optionally,
of at least one monomer of formula (II):
**(R¹)(R¹-C=C(R³)-C(O)-O-[CH₂CH(R⁴)O]ₘ-[CH(R⁵)-CH₂O]ₙ-R⁶**
in which formula:
the R¹ radicals, which are identical or different, are defined as above,
R³ is a hydrogen atom or a methyl radical,
R⁴ and R⁵, which are identical or different, represent a hydrogen atom or an alkyl radical containing from 1 to 4 carbon atoms,
R⁶ is a hydrogen atom, or an alkyl, aryl, alkylaryl or arylalkyl radical containing from 1 to 30, preferably from 8 to 30, carbon atoms,
n is between 2 and 100, preferably between 6 and 100, and m is between 0 and 50.

5. Composition according to any one of Claims 1 to 4, in which the monomer (I) of the polymer (i) is a monocarboxylic or polycarboxylic acid or a carboxylic anhydride corresponding to the following formula:
**(R¹¹)HC=C(R¹²)COOH**
in which
R¹¹ represents a hydrogen atom, a -COOH group or a -(CH₂)ₙ-COOH group in which n is between 1 and 4, or a C₁-C₄ alkyl radical; R¹² represents a hydrogen atom, a - (CH₂)ₘ-COOH group in which n is between 1 and 4, or a C₁-C₄ alkyl radical.

6. Composition according to Claim 5, in which the polymer (i) is derived from the polymerization:
of at least one monomer of formula (I):
**(R¹)(R¹)-C=C(R¹)-COOH** **(I)**
in which the R¹ radicals, which are identical or different, represent a hydrogen atom, a methyl or ethyl radical, optionally having a -COOH group, or a -COOH group.

7. Composition according to Claim 6, in which the monomer (I) of the polymer (i) is such that the R¹¹ radical represents a hydrogen atom, a -COOH or -(CH₂)-COOH group, a methyl radical or an ethyl radical, and in which the R¹² radical represents a hydrogen atom, a -CH₂-COOH group or a methyl radical.

8. Composition according to any one of the preceding claims, in which the monomer (I) of the polymer (i) also contains acrylamide (N-methylacrylamide, N-isopropylacrylamide), methacrylamide, polyethylene glycol methacrylate, polyethylene glycol acrylate, sodium 2-acrylamido-2-methylpropanesulphonate (SAMPS), sodium styrenesulphonate or sodium vinylsulphonate.

9. Composition according to any one of the preceding claims, in which the monomer (I) of the polymer (i) is acrylic acid, methacrylic acid, citraconic acid, maleic acid, fumaric acid, itaconic acid or crotonic acid or the anhydrides of said acids.

10. Composition according to any one of the preceding claims, in which the monomer (I) is partially replaced with (III) a vinylaromatic monomer, a C₁-C₂₀ alkyl ester of an α,β-ethylenically unsaturated acid, a vinyl or allyl ester of an α,β-ethylenically unsaturated acid, a vinyl halide or vinylidene halide, an α,β-ethylenically unsaturated nitrile, a hydroxyalkyl ester of an α,β-ethylenically unsaturated acid, or an α,β-ethylenically unsaturated amide.

11. Composition according to Claim 10, in which the monomer (III) is styrene, vinyltoluene, methyl, ethyl or butyl acrylate or methacrylate, vinyl or allyl acetate or propionate, vinyl or vinylidene chloride, acrylonitrile, hydroxyethyl or hydroxypropyl acrylates or methacrylates, acrylamide or methacrylamide.

12. Composition according to any one of the preceding claims, in which the polymer (i) is derived from the polymerization of maleic anhydride.

13. Composition according to any one of the preceding claims, in which the base (3) is ammonia or an amine.

14. Composition according to any one of the preceding claims, in which the paint is a lacquer which is crosslinkable under the effect of UV radiation.

15. Composition according to any one of the preceding claims, having a pH of between 5 and 14, preferably between 7 and 9, when there is no monomer (II) in the polymer (i).

16. Composition according to any one of Claims 1 to 14, having a pH of between 1 and 14, when the polymer (i) is derived from a monomer (I) copolymerized with a monomer (II).

17. Composition according to any one of Claims 2 to 14, having a pH of between 5 and 14, preferably between 7 and 9, when said composition also comprises an organic acid or the salt of the latter, having at least three acid functions per molecule and the third pK of which is at most equal to 10.

18. Composition according to any one of the preceding claims, in which the mole ratio between the moles of acid of the water-soluble or water-dispersible polymer and the moles of the total cerium atoms of the dispersion is between 0.001 and 5.0.

19. Composition according to Claim 18, in which the mole ratio is between 0.1 and 1.5.

20. Composition according to any one of the preceding claims, in which the size of the particles of the colloidal dispersion is at most 200 nm.

21. Composition according to Claim 19, in which the size of the particles of the colloidal dispersion is at most 10 nm.

22. Process for the purpose of preparing an aqueous paint composition, as described in any one of the preceding claims, comprising the step of mixing the colloidal dispersion with the paint and the base.

23. Process according to Claim 22, in which the dispersion is added to the paint, so as to provide an amount by weight of cerium oxide of at most 50%, on the basis of the total weight of the composition.
